# EUROPÄISCHE PATENTSCHRIFT

(11) **EP 0 960 061 B1**
(45) Veröffentlichungstag und Bekanntmachung des Hinweises auf die Patenterteilung: **05.09.2001**
(21) Anmeldenummer: 98910676.0
(22) Anmeldetag: 16.02.1998
(51) Int. Cl.: B65G 49/04

(54) **DURCHLAUFANLAGE FÜR DIE BEHANDLUNG VON WERKSTÜCKEN**
CONTINUOUS WORKPIECE TREATMENT PLANT
INSTALLATION DE TRAITEMENT EN CONTINU DE PIECES A USINER

(30) Priorität: 17.02.1997 DE 19706175
(43) Veröffentlichungstag der Anmeldung: 01.12.1999
(73) Patentinhaber: EISENMANN MASCHINENBAU KG, 71032 Böblingen (DE)
(72) Erfinder: SIMON, Martin, D-71034 Böblingen (DE); WEINAND, Hans-Joachim, D-71254 Ditzingen (DE); ABEL, Peter, D-72213 Altensteig (DE)
(74) Vertreter: Fürst, Siegfried
(86) Internationale Anmeldenummer: EP9800863
(87) Internationale Veröffentlichungsnummer: WO9835894

(56) Entgegenhaltungen:
- EP-A- 0 060 055
- DE-A- 2 608 550
- FR-A- 2 332 931
- GB-A- 880 058
- GB-A- 926 638
- US-A- 2 738 321

## Beschreibung

Die Erfindung betrifft eine Durchlaufanlage für die Behandlung von Werkstücken nach dem Oberbegriff des Patentanspruches 1, die vorzugsweise für die Reinigung, Vor- bzw. Nachbehandlung, insbesondere für eine chemische oder physikalische Behandlung und/oder Lackierung von Werkstücken Anwendung findet, wobei die einzelnen Behandlungsarten in einer Durchlaufanlage kombiniert sein können.

Bei bekannten derartigen Durchlaufanlagen ist zur Absenkung des geförderten Werkstückes aus der Förderebene heraus in ein Tauchbecken hinein die Führungsbahn über einen bestimmten, nicht veränderbaren Förderwegabschnitt entsprechend abgesenkt. Nachteilig ist hier, daß jedes Werkstück zeitlich und geometrisch den gleichen Weg, d.h. der gleichen Behandlungsfolge und -dauer unterzogen wird.

Aus der GB-A-880058 ist eine Durchlaufanlage für die Behandlung von Werkstücken, die mindestens eine Behandlungsstation und eine Fördereinrichtung aufweist, wobei der Fördereinrichtung eine Führungsbahn zugeordnet ist, in der Grundkörper geführt werden, und bei der Mittel zum Antrieb letzterer sowie mindestens eine Steuereinheit vorgesehen sind. Zudem ist jedem Grundkörper ein an mindestens einem Verbindungsteil von letzterem hängend und zur Aufnahme von mindestens einem Werkstück ausgebildeter Tragkörper zugeordnet, jeder Tragkörper ist gelenkig mit dem jeweiligen Verbindungsteil verbunden, jedes Verbindungsteil ist unter Einschluß einer Hubeinheit am jeweiligen Grundkörper gehaltert, zudem ist jeder Hubeinheit eines Grundkörpers eine Steuereinheit zur selektiven Ansteuerung des Verbindungsteiles zugeordnet. Nachteilig an dieser Anlage ist vorallem, daß die Verbindungsteile zwischen Tragkörper und Grundkörper Zahnrad/Zahnstange- bzw. Zahnrad/Ketten-Baugruppen aufweisen, die ihrerseits Abrieb erzeugen, welcher das Behandlungsmedium verschmutzt, bzw., daß sich der von den aufsteigenden Dämpfen der Behandlungsmedien ausgehende Niederschlag an vorgenannten Baugruppen erst einmal festsetzt und durch Bewegung besagter Vorrichtungsteile später gelockert und dann in ein nachfolgendes Behandlungsmedium fällt, welches dadurch ebenfalls verschmutzt wird.

Daher besteht die Aufgabe der Erfindung vorallem darin, eine bekannte Durchlaufanlage für die Behandlung von Werkstücken derart weiter zu bilden, daß von der Fördereinrichtung wesentlich weniger bzw. keine Verunreinigungen ausgehen, die die Behandlungsmedien oder die Werkstücke verschmutzen.

Die Aufgabe löst erfindungsgemäß eine Durchlaufanlage für die Behandlung von Werkstücken nach dem Patentanspruch 1 oder nach dem Patentanspruch 2; zweckdienliche und vorteilhafte Weiterbildungen und Ausführungsvarianten der erfinderischen Grundlösung sind in den nachgeordneten Patentansprüchen 3 bis 6 aufgeführt.

Die in wesentlichen Details neu gestaltete Durchlaufanlage bewirkt, daß die Behandlungsmedien als auch die Werkstücke selbst wesentlich weniger von an den Fördereinrichtungen zwangsläufig entstehendem Abrieb belastet werden. Zudem gestattet die neue Durchlaufanlage eine selektive Behandlungsfolge und/oder -dauer für jedes zu behandelnde Werkstück. Damit können in einer Durchlaufanlage für die Behandlung von Werkstücken unmittelbar nacheinander Werkstücke unterschiedlich behandelt werden; in vielen anwendungsspezifischen Fällen ist zudem noch eine ungetaktete und stetige Förderbe-wegung vorteilhaft. Weitere Vorteile der Erfindung sind, z.B. bei der Verwendung an einer Tauchlackieranlage,:
- keine fixierten Tauchkurven. Es ist eine variable Anpassung entsprechend dem Eintauch- und Auslaufverhalten der Werkstücke während der Inbetriebnahme bzw. während des Produktionsbetriebes allein durch Software-Änderungen möglich.
- Es können gezielte Schwenk-, Kipp- oder Hubbewegungen der Tragkörper ausgeführt werden. Einerseits kann damit einer eventuellen Luftblasenbildung in Hohlräumen der Werkstücke entgegen gewirkt werden und zum anderen wird das Ablaufen der in den Tauchbädern aufgenommenen Fluide unterstützt, dadurch verringert sich weiterhin die Fluidverschleppung von einer Behandlungsstufe zur nächsten.
- Gezieltes Eintauchen der Werkstücke, d.h. die Lage der Werkstücke kann beim Eintauchen optimiert werden.

Nachstehend wird die Erfindung von in Zeichnungen schematisiert dargestellten Ausführungsbeispielen näher erläutert. Dabei zeigen:
- Fig. 1: einen Teilabschnitt einer Durchlaufanlage für die Behandlung von Werkstücken mit einer optimierten erfindungsgemäßen Fördereinrichtung, in schematisierter Seitenansischt,
- Fig. 2: im Querschnitt eine schematisierte Ansicht eines Ausführungsbeispieles von Fig. 1 und
- Fig. 2a: im Querschnitt eine schematisierte Ansicht eines weitere Ausführungsbeispieles von Fig. 1.

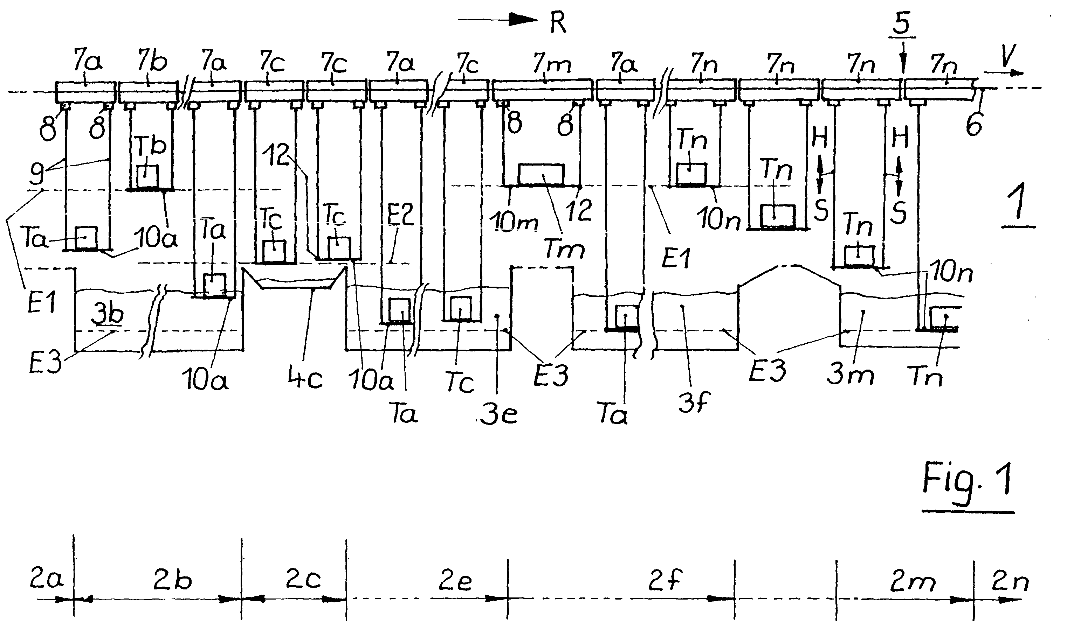

Die Fig. 1 zeigt einen Teilabschnitt einer mit einer optimierten neuen Fördereinrichtung 5 ausgestatteten Durchlaufanlage 1 für die Behandlung von Werkstücken. Diese Durchlaufanlage 1 ist hier beispielsweise als Kombi-Anlage für die Behandlung verschiedener Werkstücke Ta bis Tn ausgebildet. Im speziellen ist hier eine Tauchlackieranlage dargestellt. In den in einer Linie nacheinander folgenden Behandlungsstationen 2a bis 2n sind entsprechend den zu berücksichtigenden technologischen Behandlungsbedingungen Tauchbecken 3a, ... 3n und Wannen 4a, ... 4n angeordnet. Oberhalb der Tauchbecken 3a, ... 3n bzw. Wannen 4a, ... 4n ist eine Führungsbahn 6 der Fördereinrichtung 5 vorgesehen. In der Führungsbahn 6 sind mehrere Grundkörper 7a, ... 7n geführt, die 7a, ... 7n unmittelbar nacheinander folgen und vorzugsweise einen Schubverband bilden, dessen Antrieb hier mit bekannten Antriebsmitteln erfolgt. Die Fördergeschwindigkeit V ist zumindest innerhalb aller Behandlungsstationen 2a, ... 2n vorzugsweise gleich groß. Unterseitig sind an jedem Grundkörper 7a, ... 7n mindestens eine, beim vorliegenden Beispiel nach Fig. 1 zwei Hubeinheiten 8 angeordnet. Von diesen Hubeinheiten 8 hängt jeweils mindestens ein Verbindungsteil 9 herab, dessen 9 unteres Ende zur Halterung eines Tragkörpers 10a, ... 10n dient. Jedes Verbindungsteil 9 ist mittels einer gelenkartig ausgebildeten Halterung 12 mit dem jeweiligen Tragkörper 10a, ... 10n verbunden. Das Verbindungsteil 9 besteht aus starren oder flexiblen Teilen.

Die Tragkörper 10a, ... 10n sind vorzugsweise zur Aufnahme von einem oder mehreren Werkstücken Ta, ...Tn ausgebildet, wobei letztere Ta, ... Tn verschiedene geometrische Abmessungen besitzen können. Entsprechend dem gängigen Produktionsprofil des Anlagenbetreibers ist eine Anzahl gleicher oder ein Sortiment von Grundkörpern 7a, ...7n und Tragkörpern 10a, ...10n bereitstellbar, aus dem an einer vorgebbaren übergabestelle in der Gesamt-Anlage entsprechend des Produktionsflusses der Werkstücke die gerade benötigten Körper 7a, ...7n und 10a, ...10n in den besagten Schubverband im Austausch einschleusbar sind.

Der Abstand zwischen der obersten Kante der Tauchbecken 3a, ... 3n bzw. der Wannen 4a, ...4n und der Unterkante der geführten Grundkörper 7a, ...7n ist dabei so gewählt, daß jeder Tragkörper 10a, ... 10n unabhängig von seiner momentanen Position in der horizontalen Förderrichtung selektiv in eine von mehreren Transportebenen, hier speziell die Transportebene E 1 und E 2, gehoben H bzw. gesenkt S werden kann.

In der Fig. 1 liegt die Transportebene E 1 über allen Behandlungseinheiten. Die Transportebene E 2 liegt über den Tauchbecken 3a, ... 3n und Wannen 4a, ...4n. Die in dieser Transportebene E 2 beförderten Tragkörper 10a mit Werkstücken Tc durchlaufen im Bereich der Behandlungsstation 2c eine nicht weiter dargestellte Sprühwaschanlage; das Wasser wird in der Wanne 4c aufgefangen.
Die gezeigten Tauchbecken 3b, 3c, 3f und 3m enthalten hier z.B. fluide Reinigungsmittel, Phosphatbad o.dgl. bzw. Lackiermittel, der konkrete jeweilige Inhalt der Tauchbecken wird entsprechend dem jeweiligen technologischen Gesamtanlagekonzept gewählt.
Als Transportebene E 3 ist in der Fig. 1 die tiefste Transportebene bezeichnet; Tragkörper 10a, ... 10n mit Werkstück Ta,...Tn befinden sich hier vollständig in dem jeweiligen Behandlungsmedium.

In der in Fig. 1 gezeigten Durchlaufanlage 1 können durch den Einsatz der neuen Fördereinrichtung 5 die verschiedenen Werkstücke Ta bis Tn, vorzugsweise unter Beibehaltung der gleichen Fördergeschwindigkeit V in allen Behandlungsstationen 2a bis 2n verschiedene Behandlungsfolgen bzw. -dauer erfahren.

Während in der Behandlungsstation 2b das Werkstück Ta noch im Tauchbecken 3b ist, wurde das Werkstück T.b bereits früher aus selbigem 3b herausgehoben.

Die Werkstücke Tc werden z.B. nach überfahren der Behandlungsstation 2b in der Behandlungsstation 2c mittels eines Sprühwäschers gereinigt und durchlaufen dann das Tauchbecken 3e in der Behandlungsstation 2e.

Das Werkstück Tm überfährt die Behandlungstationen 2b bis 2e und wird in der Behandlungsstation 2f in das Tauchbecken 3f abgesenkt.

Das Werkstück Tn wird nach überfahren mehrerer Behandlungsstationen erst in dem Tauchbecken 3m behandelt.

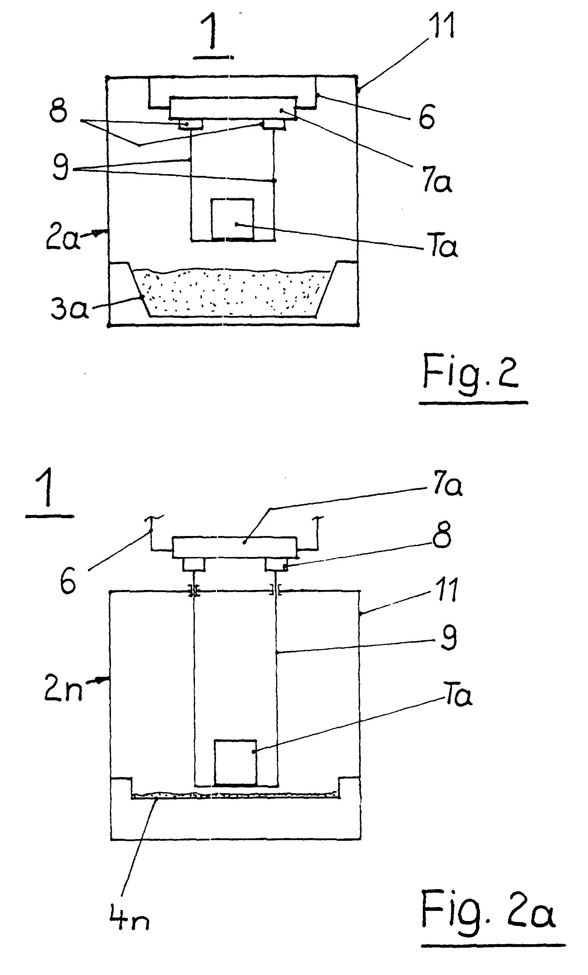

Die Figuren 2 und 2a zeigen nun noch Ausführungsbeispiele, bei denen die Behandlungsstationen 2a bis 2n in einem Behandlungstunnel 11 angeordnet sind. Bei dem Ausführungsbeispiel nach der Fig. 2 ist die Führungsbahn 6 der Fördereinrichtung 5 innerhalb des Tunnels 11 geführt.
Nachdem in den voranstehenden Abschnitten der grundsätzliche Aufbau und Arbeitsweise der gezeigten Durchlaufanlage dargestellt wurde, wird nun auf das wesentliche und neue zum Anmeldegegenstand eingegangen. Bei dem in der Figur 2a gezeigten Ausführungsbeispiel befindet sich die Führungsbahn 6 außerhalb und oberhalb der Decke des Behandlungstunnels 11, wobei die Decke abdichtbare Schlitze zum Hindurchgleiten der Verbindungsteile 9 aufweist.

Im Besonderen ist noch vorgesehen, daß die Decke von letzterem 11 von unterhalb der Hubeinheiten 8 an den geführten Grundkörpern 7a, ... 7n gehalterten Platten gebildet wird, wobei die Platten in Förderrichtung R vorzugsweise mit ihren Enden überlappen und die plattenabdichtbare Schlitze zum Hindurchführen der Verbindungsteile 9 aufweisen.

Darüber hinaus ist es unter Umständen vorteilhaft, daß jeder Grundkörper 7a, ... 7n mit einem Antriebsmittel versehen ist oder daß dem bzw. den Antriebsmitteln Brems- und/oder Beschleunigungsmittel zugeordnet werden.

Die Antriebsmittel und die Führungsbahn 6 können nach bekannten Förderer-Prinzipien aufgebaut werden, z.B. Rollenbahn, Traggurtförderer o. dgl., wobei die Aufgabestellung des Anlagenanwenders ausschlaggebend ist.

In der Führungsbahn 6 sind, vorzugsweise außerhalb der Behandlungsstationen 2a bis 2n , entsprechend des Bedarfs, Querumsetzer, Dreheinrichtungen, Hubvorrichtungen für die Grundkörper 7a, ... 7n, Weichen zum Ein- bzw. Ausschleusen der besagten Grundkörper und dgl. bekannte Mittel vorgesehen, die in den Zeichnungen wegen Bekanntheit nicht dargestellt sind.

Weitere vorteilhafte, bei Bedarf anwendbare bauliche Details bestehen nun noch darin, daß jeder Grundkörper 7a, ... 7n aus folgenden Bauteilen besteht:
- einem starren Rahmen aus vorzugsweise Stahl mit rechts- bzw. linksseitigen Reibflächen für einen Reibradantrieb,
- Laufrollen sowie Führungsrollen,
- getrennt ansteuerbare Hubeinheiten sowie Verriegelung für Tauchskids,
- Stromabnehmer für die Hubeinheiten und KTL-Stromversorgung und
- mitfahrende Steuerungseinheiten,

Alle vorgenannten Bauteile liegen dabei vorzugsweise oberhalb der bereits weiter vorn genannten, aus Platten gebildeten Decke, deren Außenkanten mit geeigneten Mitteln abgedichtet werden, z.B. mit einem Wasserkanal, Bürsten o. dgl. Mitteln.
Alle wesentlichen mechanischen und elektrischen Bauteile der Führungsbahn 6 liegen geschützt in Fördereinhausungen. Diese stehen vorzugsweise unter einem geringen überdruck, damit das Eindringen von Dämpfen durch die Schlitze für die Verbindungsteile verhindert wird.

Weitere konstruktive Details können noch derart sein, daß:
- die Grundkörper 7a, ... 7n mit Stoßdämpfern ausgegestattet sind, so daß ggf. der Aufprall zweier Grundkörper gedämpft wird, oder
- Schwingungsdämpfer vorgesehen sind, um das Schwingen von masseintensiven Werkstücken zu mindern.

Alle in der vorstehenden Beschreibung erwähnten sowie auch die nur allein aus der Zeichnung entnehmbaren Merkmale sind als weitere Bestandteile der Erfindung, auch wenn sie nicht besonders hervorgehoben und insbesondere nicht in den Ansprüchen erwähnt sind.

### Bezugsziffernverzeichnis

- 1: Durchlaufanlage für die Behandlung von Werkstücken
- 2a, ... 2n: Behandlungsstationen
- 3a, ... 3n: Tauchbecken
- 4a, ... 4n: Wannen
- 5: Fördereinrichtung
- 6: Führungsbahn
- 7a, ... 7n: geführte Grundkörper
- 8: Hubeinheiten
- 9: Verbindungsteil
- 10a, ... 10n: Tragkörper
- 11: Behandlungstunnel
- 12: Halterung, gelenkartig ausgebildet

- E 1, E 2, E 3: Transportebenen
- H: Heben
- R: Förderrichtung
- S: Senken
- Ta, ... Tn: Werkstücke
- V: Fördergeschwindigkeit

## Patentansprüche

1. Durchlaufanlage für die Behandlung von Werkstücken, die mindestens eine Behandlungsstation (2a, ... 2n), z.B. ein Tauchbecken (3a, ... 3n), und eine Fördereinrichtung (5) aufweist, wobei der Fördereinrichtung (5) eine Führungsbahn (6) zugeordnet ist, in der (6) Grundkörper (7a, ... 7n) geführt werden, und bei der Mittel zum Antrieb letzterer (7a, ... 7n) sowie mindestens eine Steuereinheit vorgesehen sind, wobei jedem Grundkörper (7a, ... 7n) ein an mindestens einem Verbindungsteil (9) von letzterem (7a, ... 7n) hängend und zur Aufnahme von mindestens einem Werkstück (Ta, ... Tn) ausgebildeter Tragkörper (10a, ... 10n) zugeordnet ist, der gelenkig (12) mit dem /den jeweiligen Verbindungsteil (9) verbunden ist, sowie jedes Verbindungsteil (9) unter Einschluß einer Hubeinheit (8) am jeweiligen Grundkörper (7a, ... 7n) gehaltert ist, nebst Zuordnung je einer Steuereinheit zur selektiven Ansteuerung des Verbindungsteiles (9) für jede Hubeinheit (8),
**dadurch gekennzeichnet,**
daß die Behandlungsstationen (2a, ... 2n) innerhalb eines Behandlungstunnels (11) angeordnet sind und die Führungsbahn (6) außerhalb und oberhalb der Decke des Behandlungstunnels (11) geführt ist, wobei die Decke abdichtbare Schlitze zum Hindurchgleiten der Verbindungsteile (9) aufweist.

2. Durchlaufanlage für die Behandlung von Werkstücken, die mindestens eine Behandlungsstation (2a, ... 2n), z.B. ein Tauchbecken (3a, ... 3n), und eine Fördereinrichtung (5) aufweist, wobei der Fördereinrichtung (5) eine Führungsbahn (6) zugeordnet ist, in der (6) Grundkörper (7a, ... 7n) geführt werden, und bei der Mittel zum Antrieb letzterer (7a, ... 7n) sowie mindestens eine Steuereinheit vorgesehen sind, wobei jedem Grundkörper (7a, ... 7n) ein an mindestens einem Verbindungsteil (9) von letzterem (7a, ... 7n) hängend und zur Aufnahme von mindestens einem Werkstück (Ta, ... Tn) ausgebildeter Tragkörper (10a, ... 10n) zugeordnet ist, der gelenkig (12) mit dem /den jeweiligen Verbindungsteil (9) verbunden ist, sowie jedes Verbindungsteil (9) unter Einschluß einer Hubeinheit (8) am jeweiligen Grundkörper (7a, ... 7n) gehaltert ist, nebst Zuordnung je einer Steuereinheit zur selektiven Ansteuerung des Verbindungsteiles (9) für jede Hubeinheit (8),
**dadurch gekennzeichnet,**
daß die Behandlungsstationen (2a, ... 2n) innerhalb eines Behandlungstunnels (11) angeordnet sind und die Decke von letzterem (11) von unterhalb der Hubeinheiten (8) an den geführten Grundkörpern (7a, ... 7n) gehalterten Platten gebildet wird, wobei die Platten in Förderrichtung (R) vorzugsweise mit ihren Enden überlappen und die Platten abdichtbare Schlitze zum Hindurchführen der Verbindungsteile (9) aufweisen.

3. Durchlaufanlage nach Anspruch 1 oder 2,
**dadurch gekennzeichnet,**
daß die geführten Grundkörper (7a, ... 7n) mindestens im Bereich der Behandlungsstationen (2a, ... 2n) einen Schubverband bilden.

4. Durchlaufanlage nach einem der Ansprüche 1, 2 oder 3,
**dadurch gekennzeichnet,**
daß jeder Grundkörper (7a, ... 7n) mit einem Antriebsmittel versehen ist.

5. Durchlaufanlage nach einem der vorhergehenden Ansprüche,
**dadurch gekennzeichnet,**
daß dem bzw. den Antriebsmitteln Brems- und /oder Beschleunigungsmittel zugeordnet sind.

6. Durchlaufanlage nach mindestens einem der Ansprüche 3 bis 5,
**dadurch gekennzeichnet,**
daß zumindest innerhalb der Behandlungsstationen (2a bis 2n) allen geführten Grundkörpern (7a, ... 7n) kein Haltepunkt zugeordnet ist.

## Claims

1. Continuously operating plant for treatment of workpieces, which comprises at least one treatment station (2a, ...2n), for example an immersion tank (3a,... 3n), and a conveying device (5), wherein the conveying device (5) is associated with a guide path (6), in which path (6) base bodies (7a, ... 7n) are guided, and in which means for the drive of the latter (7a, ... 7n) as well at least one control unit are provided, wherein each base body (7a, ... 7n) is associated with a support body (10a, ... 10n), which is suspended at at least one connecting part (9) of the latter (7a, ... 7n), is constructed for reception of at least one workpiece (Ta, ... Tn) and is pivotably connected (12) with the or the respective connecting part (9), as well as each connecting part (9) is mounted at the respective base body (7a, ... 7n) with inclusion of a stroke unit (8), together with association of a respective control unit for selective control of the connecting part (9) for each stroke unit (8), **characterised in that** the treatment stations (2a, ... 2n) are arranged within a treatment tunnel (11) and the guide path (6) is led outside and above the ceiling of the treatment tunnel (11), wherein the ceiling has sealable slots for sliding through of the connecting parts (9).

2. Continuously operating plant for treatment of workpieces, which comprises at least one treatment station (2a, ...2n), for example an immersion tank (3a,... 3n), and a 0 conveying device (5), wherein the conveying device (5) is associated with a guide path (6), in which path (6) base bodies (7a, ... 7n) are guided, and in which means for the drive of the latter (7a, ... 7n) as well at least one control unit are provided, wherein each base body (7a, ... 7n) is associated with a support body (10a, ... 10n), which is suspended at at least one connecting part (9) of the latter (7a, ... 7n), is constructed for reception of at least one workpiece (Ta, ... Tn) and is pivotably connected (12) with the or the respective connecting part (9), as well as each connecting part (9) is mounied at the respective base body (7a, ... 7n) with inclusion of a stroke unit (8), together with association of a respective control unit for selective control of the connecting part (9) for each stroke unit (8), **characterised in that** the treatment stations (2a, ... 2n) are arranged within a treatment tunnel (11) and the ceiling of the latter (11) is formed by plates mounted below the stroke units (8) at the guided base bodies (7a, ... 7n), wherein the plates preferably overlap by their ends in conveying direction (R) and the plates have sealable slots for sliding through of the connecting parts (9).

3. Continuously operating plant according to claim 1 or 2, **characterised in that** the guided base bodies (7a, ... 7n) form a thrust unit at least in the region of the treatment stations (2a, ... 2n).

4. Continuously operating plant according to one of claims 1, 2 and 3, **characterised in that** each base body (7a, ... 7n) is provided with a drive means.

5. Continuously operating plant according to one of the preceding claims, **characterised in that** brake means and/or acceleration means are associated with the drive means.

6. Continuously operating plant according to at least one of claims 3 to 5, **characterised in that** no mounting point is associated with any guided base bodies (7a, ... 7n) at least within the treatment stations (2a to 2n).

## Revendications

1. Installation en continu pour le traitement de pièces, qui présente au moins une station de traitement (2a,...2n), par exemple un bassin de trempage (3a,...3n), et un dispositif de transport (5), une voie de guidage (6) étant attribuée au dispositif de transport (5), voie dans laquelle (6) des corps de base (7a, ...7n) sont guidés, et dans le cas de laquelle des moyens d'entraînement de ces derniers (7a,....7n) ainsi qu'au moins une unité de commande sont prévus, un corps porteur (10a,...10n), formé au moins sur une pièce de raccordement (9) accrochée à ce dernier (7a,....7n) et pour le logement d'au moins une pièce (Ta, ... Tn), étant attribué à chaque corps de base (7a, ...7n), ce corps porteur étant relié de façon articulée (12) avec la/les pièce(s) de raccordement respective(s)⁽⁹⁾, et chaque pièce de raccordement (9) étant maintenue sur le corps de base (7a, ...7n) respectif par inclusion d'une unité de levage (8), avec en outre l'attribution à chacun d'une unité de commande pour la commande sélective de la pièce de raccordement (9) pour chaque unité de levage (8), **caractérisée en ce que** les stations de traitement (2a, ...2n) sont placées dans un tunnel de traitement (11) et que la voie de guidage (6) est menée en-dehors et au-dessus du plafond du tunnel de traitement (11), le plafond présentant des fentes pouvant être étanchéifiées pour y faire coulisser les pièces de raccordement (9).

2. Installation en continu pour le traitement de pièces, qui présente au moins une station de traitement (2a,...2n), par exemple un bassin de trempage (3a,...3n), et un dispositif de transport (5), une voie de guidage (6) étant attribuée au dispositif de transport (5), voie dans laquelle (6) des corps de base (7a, ...7n) sont guidés, et dans le cas de laquelle des moyens d'entraînement de ces derniers (7a,....7n) ainsi qu'au moins une unité de commande sont prévus, un corps porteur (10a,...10n), formé au moins sur une pièce de raccordement (9) accrochée à ce dernier (7a,...7n) et pour le logement d'au moins une pièce (Ta,...Tn), étant attribué à chaque corps de base (7a, ...7n), ce corps porteur étant relié de façon articulée (12) avec la/les pièce(s) de raccordement respective(s)⁽⁹⁾, et chaque pièce de raccordement (9) étant maintenue sur le corps de base (7a, ...7n) respectif par inclusion d'une unité de levage (8), avec en outre l'attribution à chacun d'une unité de commande pour la commande sélective de la pièce de raccordement (9) pour chaque unité de levage (8), **caractérisée en ce que** les stations de traitement (2a, ...2n) sont placées dans un tunnel de traitement (11) et que le plafond de ce dernier (11) est formé par des plaques maintenues sur les corps de base (7a,...7n) guidés par le dessous des unités de levage (8), les plaques se chevauchant de préférence avec leurs extrémités dans le sens de transport (R) et les plaques présentant des fentes pouvant être étanchéifiées pour y faire coulisser les pièces de raccordement (9).

3. Installation en continu selon la revendication 1 ou 2, **caractérisée en ce que** les corps de base (7a, ...7n) guidés forment un convoi poussé au moins dans la partie des stations de traitement (2a, ...2n).

4. Installation en continu selon l'une des revendications 1, 2 ou 3, **caractérisée en ce que** chaque corps de base (7a,...7n) est muni d'un moyen d'entraînement.

5. Installation en continu selon l'une des revendications précédentes, **caractérisée en ce que** des moyens de freinage et/ou d'accélération sont attribués au ou aux moyens d'entraînement.

6. Installation en continu selon l'une des revendications 3 à 5, **caractérisée en ce qu'**aucun point d'arrêt n'est attribué aux corps de base (7a, ...7n) guidés, au moins à l'intérieur des stations de traitement (2a à 2n).
